(19) Europäisches Patentamt
European Patent Office
Office européen des brevets

(11) Veröffentlichungsnummer: **0 258 640 B1**

# (12) EUROPÄISCHE PATENTSCHRIFT

(45) Veröffentlichungstag der Patentschrift: **27.12.90**

(51) Int. Cl.⁵: **C08G 77/06**, C08G 77/10

(21) Anmeldenummer: **87111039.1**

(22) Anmeldetag: **30.07.87**

## (54) Verfahren zur Ketten-stabilisierung von Organo-polysiloxanen.

(30) Priorität: **30.07.86 DE 3625688**

(43) Veröffentlichungstag der Anmeldung:
**09.03.88 Patentblatt 88/10**

(45) Bekanntmachung des Hinweises auf die Patenterteilung:
**27.12.90 Patentblatt 90/52**

(84) Benannte Vertragsstaaten:
**BE DE ES FR GB NL**

(56) Entgegenhaltungen:
**EP-A- 0 107 129**
**EP-A- 0 119 092**
**US-A- 4 564 693**

**Encyclopedia of Polymer Science and Technology, Wiley-Interscience 1985, Seite 204, 216**
**Chemistry and Technology of Silicones, W.Noll, Academic Press, Seiten 78, 95 und 196**

(73) Patentinhaber: **WACKER-CHEMIE GMBH, Prinzregentenstrasse 22, D-8000 München 22(DE)**

(72) Erfinder: **Burkhardt, Jürgen, Dr. Dipl.-Chem., Isenbreite 25, D-8261 Winhöring(DE)**
Erfinder: **Streckel, Willi Dipl.-Ing., Neuhauserstrasse 8, D-8261 Mehring/Öd(DE)**
Erfinder: **Böck, Andreas, Kastlerstrasse 13, D-8261 Emmerting(DE)**

**EP 0 258 640 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Herstellung von gewissen oligomeren Siloxanolgemischen und ein Verfahren zur Blockierung der endständigen Hydroxylgruppen und Änderung des Molekulargewichts von in den endständigen Einheiten Hydroxylgruppen aufweisenden Organopolysiloxanen unter Verwendung dieser oligomeren Siloxanolgemische.

Verfahren zur Blockierung der endständigen Hydroxylgruppen und Änderung des Molekulargewichts von in den endständigen Einheiten je eine Hydroxylgruppe tragenden Polyorganosiloxanen sind bekannt. In US 4 203 913 (ausgegeben am 20. Mai 1980, J. Burkhardt et al., Wacker-Chemie GmbH) ist die Umsetzung von α,ω-Dihydroxypolydiorganosiloxanen mit α,ω -Bistrimethylsiloxypolydiorganosiloxanen in Gegenwart von Phosphornitridchloriden beschrieben. In DE-OS 35 24 484 (angemeldet am 09. Juli 1985, J. Burkhardt, Wacker-Chemie GmbH) ist es bekannt, die endständigen Hydroxylgruppen von α ,ω -Dihydroxypolyorganosiloxanen durch deren Reaktion mt Hexaorganodisilazan in Gegenwart von Phosphornitridchlorden zu blockieren, d. h. die endständigen Hydroxylgruppen durch Triorganosiloxygruppen zu ersetzen.

Aufgabe der Erfindung war es, ein Reagens zur Blockierung der endständigen Hydroxylgruppen von in den endständigen Einheiten Hydroxylgruppen aufweisenden Polyorganosiloxanen (α,ω -Dihydroxypolyorganosiloxanen) zur Verfügung zu stellen, welches bei den für die genannte Blockierungsreaktion üblichen Drükken und Temperaturen nur wenig flüchtig ist. Eine weitere Aufgabe der Erfindung war es, ein Verfahren zur Blockierung der Hydroxylgruppen und Änderung des Molekulargewichts von α,ω -Dihydroxypolyorganosiloxanen zu entwickeln das es erlaubt, bei vergleichbarer Raum-Zeit-Ausbeute weniger Katalysator, beispielsweise Phosphornitridchloride, zu verwenden und somit die Bildung von cyclischen Organosiloxanen zurückzudrängen und gegebenenfalls verwendetes Desaktivierungsmittel für den Katalysator einzusparen.

Diese Aufgaben werden durch die vorliegende Erfindung dadurch gelöst, daß die in den endständigen Einheiten Hydroxylgruppen aufweisenden Polyorganosiloxane mit oligomeren Siloxanolgemischen umgesetzt werden, welche als Komponenten Siloxanole sowohl der Formel

$$HO\text{-}SiR_2O\text{-}\left[\text{-}SiR_2O\text{-}\right]_n H \qquad (I)$$

als auch solche der Formel

$$R_3SiO\text{-}\left[\text{-}SiR_2O\text{-}\right]_m H \qquad (II)$$

enthalten, worin

<u>n</u> und <u>m</u> jeweils gleiche oder verschiedene ganze Zahlen sind, vorzugsweise mit einem jeweiligen Durchschnittswert zwischen 4 und 30, insbesondere zwischen 6 und 15,

<u>R</u> jeweils gleiche oder verschiedene einwertige Reste, nämlich gegebenenfalls halogenierte Kohlenwasserstoffreste mit 1 - 18 Kohlenstoffatomen oder Wasserstoffatome bedeuten mit der Maßgabe, daß an jedes Siliciumalion, an das Wasserstoff unmittelbar gebunden ist, auch Kohlenwasserstoff gebunden ist;

die genannten oligomeren Siloxanolgemische sind herstellbar, indem man ein Gemisch aus mindestens einer Verbindung der Formel $R_3SiCl$ und mindestens einer Verbindung der Formel $R_2SiCl_2$ mit Wasser umsetzt, anschließend die wäßrige Phase abtrennt und endlich das Gemisch destillativ von leichtersiedenden Nebenprodukten befreit, wobei die Reaktionsbedingungen so gewählt werden, daß das so hergestellte Gemisch eine Viskosität von 10 bis 80 $mm^2s^{-1}$ bei 25° C besitzt.

Beispiele für Kohlenwasserstoffreste R in den Formeln (I) und (II) und damit für organische Reste in den bei dem erfindungsgemäßen Verfahren einsetzbaren Organosiloxanolgemischen sind Alkylreste, wie der Methyl-, Ethyl-, n-Propyl-, Isopropyl-, n-Butyl- und sec.-Butylrest sowie Octadecylreste; aliphatische Reste mit Kohlenstoff-Kohlenstoff-Doppelbindung, wie der Vinyl- und Allylrest; Arylreste, wie der Phenylrest und Xenylreste Alkarylreste, wie Tolylreste; und Aralkylreste, wie der Benzylrest.

Beispiele für halogenierte Kohlenwasserstoffreste R in den Formeln (I) und (II) und damit ebenfalls für organische Reste in den bei dem erfindungsgemäßen Verfahren einsetzbaren Organosiloxanolgemischen sind Halogenalkylreste, wie der 3,3,3-Trifluorpropylrest, und Halogenarylreste, wie o-, p- und m-Chlorphenylreste.

Bevorzugte Reste R sind Wasserstoffatome und gegebenenfalls halogenierte Kohlenwasserstoffreste mit 1 bis 10 Kohlenstoff atomen; besonders bevorzugt sind Wasserstoffatome, C1 bis C3-Alkylreste, C1-bis C3-Alkenylreste und Phenylreste, im Besonderen Wasserstoffatome, Methyl- und Vinylreste.

Im erfindungsgemäßen Verfahren zur Herstellung von oligomeren Organosiloxanolgemischen enthaltend Verbindungen der Formeln (I) und (II) werden Verbindungen der Formeln $R_3SiCl$ (IV) und $R_2SiCl_2$

(V) mt Wasser umgesetzt. Vorzugsweise beträgt das Molverhältnis der eingesetzten Verbindungen (IV) : (V) 1 : 10 bis 1 : 100, insbesondere 1 : 15 bis 1 : 50.

Das Volumenverhältnis des eingesetzten Silangemisches aus Verbindungen der Formeln (IV) und (V) zu im Verfahren eingesetztem Wasser beträgt vorzugsweise 1 : 3 bis 1 : 20 , insbesondere 1 : 5 bis 1 : 10 . Das Silangemisch ((IV) + (V)) wird vorzugsweise bei Temperaturen von 10 °C bis 80 °C, insbesondere von 20 °C bis 60 °C mit der vorgesehenen Menge Wasser in Kontakt gebracht. Die Hydrolyse kann beim Druck der umgebenden Atmosphäre, also etwa 0,101 MPa (abs.), sie kann aber auch bei höheren oder niedrigeren Drücken durchgeführt werden.

Nach Ablauf der Hydrolysereaktion erhält man ein Phasengemisch bestehend aus einer wäßrig salzsauren Phase und einer Organosiloxanphase, wobei letztere neben Verbindungen der Formeln (I) und (II) auch solche der Formel (III):

$$R_3SiO-\left[-SiR_2O-\right]_o SiR_3 \qquad (III),$$

worin o eine der Bedeutungen von n bzw. m haben kann, und cyclische Siloxane enthält. Die wäßrig salzsaure Phase wird nun zweckmäßigerweise von der Organosiloxanphase abgetrennt, beispielsweise in einem liegenden, mit Glas- oder Mineralwolle gefüllten Zylinder (Koaleszor). Die so isolierte Organosiloxanphase enthält nur noch geringe Mengen an HCl. Obwohl im allgemeinen nicht notwendig, kann der HCl-Gehalt durch Waschen mit Wasser und nochmaliger Phasentrennung verringert werden. Anschließend werden aus der Organosiloxanphase die zumeist leichter flüchtigen Nebenprodukte, also vor allem cyclische Siloxane und Verbindungen der Formel (III), destillativ abgetrennt, vorzugswese bei Drücken von 5 hPa (abs.) bis 15 hPa (abs.) und Temperaturen bis zu 140 °C. Auf diese Weise erhält man das erfindungsgemäße Gemisch aus oligomeren Siloxanolen; dieses enthält sowohl Verbindungen der Formel (I) als auch solche der Formel (II), wie $^{29}Si$-NMR-Messungen an diesen Gemischen ergeben haben. So ist das Verhältnis der Flächen unter den Resonanzsignalen der $HO-SiR_2O$-Gruppen zu den $R_3SiO$-Gruppen größer als 1; für die unten in den Beispielen hergestellten bzw. eingesetzten Gemische nimmt dieses Verhältnis Werte zwischen 2 und 3 an. Aus diesem Flächenverhältnis kann man den Anteil der Komponenten der Formel (I) bzw. (II) am Gemisch aus Komponenten der Formeln (I) und (II) abschätzen, indem man grob vereinfachend die Durchschnittswerte für m und n in diesen Formeln gleichsetzt. So ergibt sich für ein Flächenverhältnis der Signale der $HO-SiR_2$ O-Gruppen zu dem der $R_3SiO$-Gruppen von 2 bzw. 3 ein Anteil von Komponenten der Formel (I) von einem Drittel bzw. der Hälfte der Gesamtzahl der Moleküle der Formeln (I) und (II).

Die Viskosität des erfindungsgemäß hergestellten Gemisches gemessen bei 25° C beträgt vorzugsweise 15 $mm^2s^{-1}$ bis 60 $mm^2s^{-1}$, insbesondere 20 $mm^2s^{-1}$ bis 30 $mm^2s^{-1}$; der Gehalt an Si-gebundenen Hydroxylgruppen beträgt vorzugsweise 1 bis 4,5 Gewichtsprozent, insbesondere 2 bis 3,5 Gewichtsprozent, jeweils bezogen auf das Gesamtgewicht von Verbindungen der Formeln (I) und (II). Die genannten oligomeren Organosiloxanolgemische können kontinuierlich, teilkontinuierlich und diskontinuierlich hergestellt werden. Bevorzugt ist die kontinuierliche Herstellungsweise, für die sich unter anderem Kreislaufreaktoren (Englisch: Loops) eignen, wie sie beispielsweise in US 3 939 195 beschrieben sind.

Ganz besonders bevorzugt als Komponenten der erfindungsgemäß herstellbaren und erfindungsgemäß zur Blockierung der endständigen Hydroxylgruppen von Polyorganosiloxanen einsetzbaren oligomeren Organosiloxanolgemischen sind solche der Formeln (I) und (II),in denen mindestens 80 % der Reste R Methylreste sind; insbesondere bevorzugt als Komponenten der Formeln (I) und (II) sind solche der Formeln

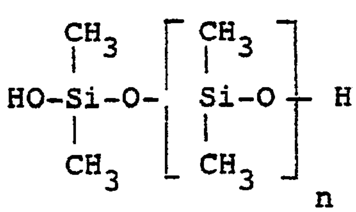

(VI) und

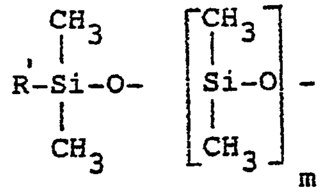

(VII),

worin n und m die oben für die Formeln (I) und (II) angegebenen Bedeutungen haben und

R' ein Wasserstoffatom, eine Methyl- oder ene Vinylgruppe, vorzugsweise eine Methyl- oder Vinylgruppe bedeutet.

Die erfindungsgemäßen oligomeren Organosiloxanolgemische, welche Verbindungen der Formeln (I) und (II) bzw. (VI) und (VII) enthalten, werden im erfindungsgemaßen Verfahren mit in den endständigen Einheiten Hydroxylgruppen aufweisenden Organopolysiloxanen umgesetzt, um die genannten Hydroxylgruppen zu blockieren.

Unter den Bedingungen, bei denen Verbindungen der Formeln (I) und (II) mit in den endständigen Einheiten Hydroxylgruppen aufweisenden Organopolysiloxanen erfindungsgemäß umgesetzt werden, können aber auch die genannten Organopolysiloxane mit sich selbst reagieren, sei es unter Spaltung von Siloxanbindungen, sei es unter Knüpfung solcher Bindungen durch Kondensation von jeweils zwei Silanolgruppen. Diese als Kondensaton und/oder Äquilibrierung bezeichnete(n) Reaktion(en) kann bzw. können zu erheblichen Veränderungen, insbesondere Erhöhungen des Molekulargewichts und somt auch der Viskosität des eingesetzten Organopolysiloxans währenddes erfindungsgemäßen Verfahrens führen. Seine größte wirtschaftliche Bedeutung wird das erfindungsgemaße Verfahren für die Umsetzung von relativ niederviskosen, in den endständigen Einheiten Hydroxylgruppen aufweisenden Organopolysiloxanen mit Verbindungen der Formeln (I) und (II) haben, wobei die als Produkt anfallenden Organopolysiloxane wesentlich viskoser sind als die eingesetzten.Diese in den endständigen Einheiten Triorganosiloxygruppen aufweisenden Organopolysiloxane haben vorzugsweise eine Viskosität von 5 Pa.s bis 50.000 Pa.s, insbesondere von 10 Pa.s bis 20.000Pa.s, jeweils gemessen bei 25° C. Beispiele für im erfindungsgemäßen Verfahren einsetzbare Organopolysiloxane sind insbesondere lineare, in den endständigen Einheiten je eine Hydroxylgruppe aufweisende Organopolysiloxane, beispielsweise solche der Formel

$HO (SiR''_2O)_p H$ (VIII).

In dieser Formel bedeuten R" gleiche oder verschiedene, einwertige, ggf. halogenierte Kohlenwasserstoffreste oder Wasserstoff mit der Maßgabe, daß an jedes Siliciumatom, an das Wasserstoff unmittelbar gebunden ist, auch ein Kohlenwasserstoffrest gebunden ist, und p eine ganze Zahl im Wert von mindestens 2. Obwohl durch die obige, häufig verwendete Formel nicht dargestellt, können bis zu insgesamt 5 Molprozent der Einheiten der Formel $SiR''_2O$durch andere, meist jedoch lediglich als mehr oder weniger schwer vermeidbare Verunreinigungen vorliegende Siloxaneinheiten, wie solche der Formel $R''SiO_{3/2}$, $R''_3SiO_{1/2}$ , wobei R" jeweils die oben dafür angegebene Bedeutung hat oder $SiO_{4/2}$ oder Gemische aus mindestens zwei solcher Einheiten ersetzt sein.

Vorzugsweise enthalten die Reste R" in der oben angegebenen Formel (VIII) höchstens 1 bis 18 Kohlenstoffatom(e) je Rest. Beispiele für Kohlenwasserstoffreste R" und damit für organische Reste in den bei dem erfindungsgemäßen Verfahren einsetzbaren Organopolysiloxanen sind Alkylreste, wie der Methyl-, Ethyl-, n-Propyl-,Isopropyl-,n-Butyl- und sec.-Butylrest sowie Octadecylreste; aliphatische Reste mit Kohlenstoff-Kohlenstoff-Doppelbindung, wie der Vinyl- und Allylrest; Arylreste, wie der Phenylrest und Xenylreste; Alkarylreste, wie Tolylreste; und Aralkylreste, wie der Benzylrest.

Beispiele für halogenierte Kohlenwasserstoffreste R" und damit ebenfalls für organische Reste in den bei dem erfindungsgemäßen Verfahren einsetzbaren Organopolysiloxanen sind Halogenalkylreste, wie der 3,3,3-Trifluorpropylrest, und Halogenarylreste, wie o-, p- und m-Chlorphenylreste.

Das erfindungsgemäße Verfahren dürfte jedoch die größte Bedeutung für den Einsatz von solchen, in den endständigen Einheiten je eine Si-gebundene Hydroxylgruppe enthaltenden Organopolysiloxanen haben, die Diorganopolysiloxane sind, worin alle organischen Reste Methylgruppen sind.

Das erfindungsgemäße Verfahren zur Blockierung der endständigen Hydroxylgruppen und Änderung des Molekulargewichts von Organopolysiloxanen, insbesondere solchender Formel(VIII),unter Verwendung eines Gemisches aus mindestens je einer der Verbindungen der Formeln (I) und (II) kann durch einen Katalysator beschleunigt werden. Als Katalysatoren kommen u. a. die von W. Noll (Chemistry and Technology of Silicones, Academic Press, 1968; Orlando etc., Seiten 212, 221-229) als Kondensationskatalysatoren beschriebenen Säuren und Basen in Frage. Beispiele hierfür sind Säuren wie $H_2SO_4$, Phosphorsäuren, Borsäure, Ionenaustauscher, wie säureaktivierte Bleicherden, Phosphornitridchloride, Basen, wie Hydroxide, Alkoxide und Amide der Alkalimetalle, Amine, quarternäre Ammonium- und Phosphoniumsalze, Silanolate und andere mehr.

Bevorzugt als Katalysatoren im erfindungsgemäßen Verfahren sind Phosphornitridchloride. Bei den Phosphornitridchloriden kann es sich um beliebige Phosphornitridchloride handeln, mit denen auch bisher die Kondensation von linearen, in den endständigen Enheiten je eine Si-gebundene Hydroxylgruppe enthaltenden Organopolysiloxanen gefördert werden konnte. Es können z. B. solche sein, die durch Umsetzung von 400 Gewichtsteilen Phosphorpentachlorid mit 130 Gewichtsteilen Ammoniumchlorid hergestellt wurden (vgl. z. B. "Berichte der Deutschen Chemischen Gesellschaft", 57. Jahrgang 1924, Seite 1345), oder solche sein, die durch Umsetzung von 2 Mol Phosphorpentachlorid mit 1 Mol Ammoniumchlorid erhältlich sind (vgl. z. B. US 3 839 388, ausgegeben 01. Oktober 1974, S. Nietzsche et al., Wacker-Chemie GmbH). Selbstverständlich können auch Gemische aus mindestens zwei verschiedenen Arten von Phosphornitridchloriden verwendet werden.

Phosphornitridchlorid wird vorzugsweise in Mengen von 0,1 bis 40 Gewichts-ppm, insbesondere 5 bis 20 Gewichts-ppm, jeweils bezogen auf das Gewicht der jeweils eingesetzten Menge an linearem, in den endständigen Einheiten je eine Si-gebundene Hydroxylgruppe enthaltendem Organopolysiloxan, verwendet.

Die Blockierung der Hydroxylgruppen und die Änderung des Molekulargewichts von linearen, in den endständigen Einheiten je eine Si-gebundene Hydroxylgruppe aufweisenden Organopolysiloxanen (Kondensation) wird vorzugsweise bei 0 bis 220° C, insbesondere 100 bis 180° C durchgeführt.

Um die Abführung des bei dieser Kondensation gebildeten Wassers zu erleichtern, wird die Kondensation von linearen, in den endständigen Einheiten je eine Si-gebundene Hydroxylgruppe aufweisenden Organopolysiloxanen vorzugsweise bei einem Druck unterhalb 800 hPa (abs.), insbesondere unter 10 hPa (abs.), durchgeführt. Diese Kondensation ist aber auch bei höheren Drücken durchführbar.

Die Umsetzung von oligomerem Organosiloxanolgemisch aus Komponenten der Formeln (I) und (II) (nachstehend als "Stopper" bezeichnet) mit dem in den endständigen Einheiten Hydroxylgruppen aufweisenden Organopolysiloxanen (nachstehend als "Dihydroxypolyorganosiloxan" bezeichnet), vorzugsweise solchen der Formel(VIII), wird, vorzugsweise in Gegenwart von Katalysator(en), insbesondere Phosphornitridchloriden, durch Vermischen der an der Umsetzung beteiligten Stoffe in Gang gesetzt. Prinzipiell können diese Stoffe in beliebiger Reihenfolge miteinander vermischt werden; es wird jedoch bevorzugt, daß der Katalysator, falls ein solcher verwendet wird, erst nach der Vermischung von Stopper und Dihydroxypolyorganosiloxan dem so erhaltenen Gemisch zugeführt wird.

Die Menge an eingesetztem Stopper kann in weiten Grenzen variiert werden. Je größer die Menge an Stopper im Vergleich zur Menge des Dihydroxypolyorganosiloxans gewählt wird, desto kleiner kann die Kettenlänge des durch die Umsetzung entstehenden Polymers sein. Bevorzugt sind jedoch Mengen an Stopper im Bereich von 0,1 Gewichtsprozent bis 20 Gewichtsprozent, insbesondere von 0,2 Gewichtsprozent bis 10 Gewichtsprozent, jeweils bezogen auf das Gewicht des eingesetzten Dihydroxypolyorganosiloxans.

Nach der Reaktion wird der Katalysator, falls ein solcher verwendet wurde, entfernt oder desaktiviert. Wurden Phosphornitridchloride als Katalysatoren eingesetzt, so können diese bzw. deren Folgeprodukte mittels n-Butyllithium gemäß US 4 564 693 (ausgegeben am 14.Januar 1986, M. Riederer, Wacker-Chemie GmbH) desaktiviert werden.

Das erfindungsgemäße Verfahren kann absatzweise, teilkontinuierlich oder kontinuierlich durchgeführt werden. Vorzugsweise wird es kontinuierlich durchgeführt.

Das Verfahren wird insbesondere in Reaktoren durchgeführt, die die kontinuierliche Förderung der Reaktionsmischung bei vermindertem Druck erlauben. Beispiele für solche Reaktoren sind Schneckenkneter, wie Doppelschneckenkneter und oszillierende Pilgerschrittkneter (Ko-Kneter).

Die gemäß dem erfindungsgemäßen Verfahren hergestellten Organopolysiloxane weisen endständige Einheiten der Formeln

$$R_3SiO-, \text{ insbesondere } R'-\overset{CH_3}{\underset{CH_3}{\overset{|}{\underset{|}{Si}}}}-O- \quad \text{auf,}$$

wobei R die für Formel (I) und (II) angegebenen Bedeutungen hat und R', wie für Formel (VII) angegeben, für eine Methylgruppe, eine Vinylgruppe oder ein Wasserstoffatom steht.

Bei diesen erfindungsgemäß hergestellten Organopolysiloxanen handelt es sich also insbesondere um solche mit Trimethylsiloxy-, Vinyldimethylsiloxy- und/oder Dimethyl-Wasserstoffsiloxy-Endgruppen. Es ist für den Fachmann offensichtlich, daß nach dem erfindungsgemäßen Verfahren auch Organopolysiloxane mit zwei verschiedenen Endgruppen, also beispielsweise α-Trimethylsiloxy-ω-vinyldimethylsiloxypolydiorgano siloxane,α-Trimethylsiloxy-ω-dimethylhydrogensiloxypolydiorganosiloxane sowie α-Vinyldimethylsiloxy-ω-dimethylhydrogensiloxypolydiorganosiloxane hergestellt werden können. Ebenso können Gemische von α ,ω -Dihydroxypolyorganosiloxanen, z.B. solchen der Formel (VIII), mit einem oder einem Gemisch von Stoppern, es kann auch ene Art von α,ω -Dihydroxypolyorganosiloxan mit einem Gemisch von Stoppern umgesetzt werden. Als Gemische von Stoppern sind beispielsweise solche Gemische der Formeln (VI) und (VII) anzusehen, in denen für einen Teil der Verbindungen der Formel (VII) der Rest R' eine Vinylgruppe, für den anderen Teil R' eine Methylgruppe und/oder en Wasserstoffatom bedeuten, sowie ähnliche, dem Fachmann naheliegende Kombinationen.

Die im erfindungsgemäßen Verfahren eingesetzten Dihydroxypolyorganosiloxane, also insbesondere die der Formel (VIII), haben vorzugsweise eine Viskosität von 50 bis 1.000 mPa.s, insbesondere von 100 bis 300 mPa.s, jeweils gemessen bei 25°C.

Die so erhaltenen Polymere können z. B. zur Herstellung von Elastomeren, und, falls das Polymer beidseitig Trimethylsiloxy-endblockiert ist, als Fadengleitmittel verwendet werden.

Das in den folgenden Beispielen verwendete Phosphornitridchlorid wurde hergestellt wie folgt:

Ein Gemisch aus 417 g (2 Mol) Phosphorpentachlorid und 53,5 g (1 Mol) Ammoniumchlorid in 1000 ml Tetrachlorethan wird 12 Stunden zum Sieden unter Rückfluß erwärmt. Aus der so erhaltenen, hellgelben Lösung werden bei 160° C und unter Erniedrigung des Drucks bis auf etwa 1,33 hPa (abs.) die flüchtigen Anteile entfernt.Als Rückstand verbleiben gelbliche Kristalle, die im wesentlichen aus der Verbindung der Formel

$Cl_3PNPCl_2NPCl_3.PCl_6$

bestehen.

Soweit nicht anders angegeben, wurden die folgenden Beispiele bei 0,10 MPa (abs.) Druck und 20 bis 25° C durchgeführt.

Beispiele

A: Herstellung des oligomeren Siloxanolgemisches

Beispiel 1:

In einen Kreislaufreaktor wurden stetig ein Gemisch von 20 Volumenteilen Dimethyldichlorsilan und 1 Volumenteil Trimethylchlorsilan (Molverhältnis $(CH_3)_2SiCl/(CH_3)_3SiCl$ = 21 : 1) sowie 116 Volumenteile Wasser eingespeist. Im Kreislaufreaktor stellte sich ein Chlorwasserstoffgehalt von 10 Gewichtsprozent in der wäßrigen Phase ein. Die Temperatur im Reaktor betrug 45° C, die mittlere Verweilzeit der Reaktionsmischung im Reaktor 22 min. Von dem aus dem Reaktor stetig ausströmenden Reaktionsgemisch wurde in einem liegenden, mit Glaswolle gefüllten Zylinder die wäßrig salzsaure Phase abgetrennt. Die verbleibende Organosiloxanphase, welche weniger als 1 Gewchtsppm Chlorwasserstoff enthielt, wurde bei 10 hPa (abs.) Druck und einer Temperatur von bis zu 140° C von den leichtersiedenden Stoffen befreit. Erhalten wurde ein Siloxanolgemisch mit einer Viskosität von 28 $mm^2s^{-1}$ bei 25° C und 3,0 Gewichtsprozent an Si-gebundenen Hydroxylgruppen.

Beispiel 2:

Beispiel 1 wurde wiederholt mit der Abänderung, daß statt dem Gemisch aus Dimethyldichlorsilan und Trimethylchlorsilan ein Gemisch aus 20 Volumenteilen Dimethyldichlorsilan und einem Volumenteil Vinyldimethylchlorsilan (Molverhältnis $(CH_3)_2SiCl_2/H_2C{=}CH(CH_3)_2SiCl$= 23: 1) eingesetzt wurde. Erhalten wurde ein Siloxanolgemisch mit einer Viskosität von 26 $mm^2s^{-1}$ bei 25° C und 2,6 Gewichtsprozent an Si-gebundenen Hydroxylgruppen.

B: Blockierung der endständigen Hydroxylgruppen und Änderung des Molekulargewichts von Organopolysiloxanen

Beispiel 3:

In einen bei 150° C Temperatur und einem Druck von 0,5kPa gehaltenen Doppelschneckenkneter wurden stetig 200 l/h eines $\alpha,\omega$-Dihydroxypolydimethylsiloxans einer Viskosität von 150 $mm^2s^{-1}$ bei 25° C, 14l/h eines aus 16 Volumenteilen Dimethyldichlorsilan und einem Volumenteil Trimethylchlorsilan hergestellten oligomeren Organosiloxanolgemisches einer Viskosität von 23 $mm^2s^{-1}$ bei 25° C mit 2,4 Gewichtsprozent Si-gebundenen Hydroxylgruppen und 12 Gewichts-ppm bezogen auf das Gewicht des $\alpha,\omega$ -Dihydroxypolydimethylsiloxans Phosphornitridchlorid gelöst in Dichlormethan eingespeist. Mittels einer Zahnradpumpe wurden am Austragsrohr dem fast 150° C aufweisenden Polymer 20 ppm n-Butyllithum als 1 Gew.%ige Lösung in Silikonöl zugeführt. Erhalten wurde ein $\alpha$ ,$\omega$ -bis-Trimethylsiloxypolydimethylsiloxan mit einer Viskosität von 12 000 mPa.s bei 25° C.

Beispiel 4:

Beispiel 3 wurde wiederholt mit der Abänderung, daß statt 200 l/h 240 l/h des gleichen $\alpha$ , $\omega$ -Dihydroxypolydimethylsiloxans, statt 14 l/h nur 8 l/h des gleichen oligomeren Organosiloxanolgemisches und statt 12 Gewichts-ppm 15 Gewichts-ppm des gleichen Phosphornitridchlorids in den Doppelschneckenkneter eingespeist wurden. Erhalten wurde ein $\alpha$ , $\omega$ -bis-Trimethylsiloxypolydimethylsiloxan einer Viskosität von 100 000 mPa.s bei 25° C.

Beispiel 5:

Beispiel 3 wurde wiederholt mit der Abänderung, daß statt dem dort verwendeten Organosiloxanolgemisch 13 l/h eines aus 20 Volumenteilen Dimethyldichlorsilan und einem Volumenteil Vinyldimethylchlorsilan hergestellten oligomeren Siloxanolge misches einer Viskosität von 22 $mm^2s^{-1}$ bei 25° C mit 2,7 Gewichtsprozent Si-gebundenen Hydroxylgruppen in den Doppelschneckenkneter eingespeist wurden. Erhalten wurde ein α, ω -bis-Vinyldimethylsiloxypolydimethylsiloxan einer Viskosität von 20 000 mPa.s bei 25° C.

## Patentansprüche

1. Verfahren zur Herstellung von oligomeren Siloxanolgemischen, die als Komponenten Siloxanole sowohl der Formel

$$HO-SiR_2O-\left[-SiR_2O-\right]_n H \qquad (I)$$

als auch solche der Formel

$$R_3SiO-\left[-SiR_2O-\right]_m H \qquad (II)$$

enthalten, worin
n und m jeweils gleiche oder verschiedene ganze Zahlen sind;
R jeweils gleiche oder verschiedene einwertige Reste, nämlich gegebenenfalls halogenierte Kohlenwasserstoffreste mit 1 bis 18 Kohlenstoffatomen oder Wasserstoffatome bedeuten, mit der Maßgabe, daß an jedes Siliciumatom, an das Wasserstoff unmittelbar gebunden ist, auch ein Kohlenwasserstoffrest gebunden ist, dadurch gekennzeichnet, daß man ein Gemisch aus mindestens einer Verbindung der Formel $R_3SiCl$ und mindestens einer Verbindung der Formel $R_2SiCl_2$ mit Wasser umsetzt, anschließend die wäßrige Phase abtrennt und endlich das Gemisch destillativ von leichtersiedenden Nebenprodukten befreit, wobei die Reaktionsbedingungen so gewählt werden, daß das so hergestellte Gemisch eine Vikosität von 10 bis 80 $mm^2\ s^{-1}$ bei 25°C besitzt.

2. Verfahren zur Blockierung der endständigen Hydroxylgruppen und Änderung des Molekulargewichts von in den endständigen Einheiten Hydroxylgruppen aufweisenden Organopolysiloxanen, dadurch gekennzeichnet, daß man die genannten Organopolysiloxane mit den nach dem Verfahren nach Anspruch 1 herstellbaren oligomeren Siloxanolgemischen umsetzt.

3. Verfahren nach Anspruch 2, dadurch gekennzeichnet, daß es in Gegenwart von sauren oder basischen Katalysatoren durchgeführt wird.

4. Verfahren nach Anspruch 3, dadurch gekennzeichnet, daß saure Katalysatoren, nämlich Phosphornitridchloride, eingesetzt werden.

## Revendications

1. Procédé pour préparer des mélanges de siloxanols oligomères, contenant comme composants des siloxanols répondant à la formule:

$$HO-SiR_2O-\left[-SiR_2O-\right]_n H \qquad (I)$$

aussi bien que des siloxanols répondant à la formule:

$$R_3SiO-\left[-SiR_2O-\right]_m H \qquad (II)$$

formules dans lesquelles n et m sont des nombres entiers, identiques et différents; les symboles R représentent à chaque fois des restes monovalents, identiques ou différents, à savoir des restes d'hydrocarbures éventuellement halogénés, comportant 1 à 18 atomes de carbone, ou des atomes d'hydrogène, à la condition que, sur chaque atome de silicium auquel de l'hydrogène est directement lié, il y ait également un reste d'hydrocarbure lié, procédé caractérisé en ce qu'on fait réagir avec de l'eau un mélange d'au moins un composé de formule $R_3SiCl$ et d'au moins un composé de formule $R_2SiCl_2$, puis on sépare la phase aqueuse et enfin on élimine du mélange, par distillation, les sous-produits à bas point d'ébullition, les conditions de réaction étant choisies de façon que le mélange ainsi préparé possède une viscosité de 10 à 80 $mm^2\ s^{-1}$à 25°C.

2. Procédé pour bloquer les groupes hydroxyles terminaux et pour modifier le poids moléculaire de polyorganosiloxanesprésentant des groupes hydroxyles dans les motifs terminaux, ce procédé étant caractérisé en ce qu'on fait réagir les polyorganosiloxanes précités avec les mélanges de siloxanols oligomères que l'on peut préparer par le procédé selon la revendication 1.

3. Procédé selon la revendication 2, caractérisé en ce qu'il est conduit en présence de catalyseurs acides ou basiques.

4. Procédé selon la revendication 3, caractérisé en ce qu'on utilise des catalyseurs acides, à savoir des chlorures de nitruresde phosphore.

**Claims**

1. Process for the preparation of oligomeric siloxanol mixtures which contain, as components, siloxanols both of the formula

$$HO-SiR_2O-\left[-SiR_2O-\right]_n H \qquad (I)$$

and those of the formula

$$R_3SiO-\left[-SiR_2O-\right]_m H \qquad (II)$$

wherein $\underline{n}$ and $\underline{m}$ are in each case identical or different integers and;
$\underline{R}$ in each case denote identical or different monovalent radicals, namely optionally halogenated hydrocarbon radicals having 1-18 carbon atoms, or hydrogen atoms, with the proviso that a hydrocarbon radical is also bonded to each silicon atom to which hydrogen is bonded directly, characterized in that a mixture of at least one compound of the formula $R_3SiCl$ and at least one compound of the formula $R_2SiCl_2$ is reacted with water, the aqueous phase is then removed and the mixture is finally freed from lower-boiling by-products by distillation, the reaction conditions being chosen so that the mixture thus prepared has a viscosity of 10 to 80 $mm^2\ s^{-1}$ at 25°C

2. Process for blocking the terminal hydroxyl groups and modifying the molecular weight of organopolysiloxanes containing hydroxyl groups in the terminal units, characterized in that the organopolysiloxanes mentioned are reacted with the oligomeric siloxanol mixtures which can be prepared by the process according to Claim 1.

3. Process according to Claim 2, characterized in that it is carried out in the presence of acid or basic catalysts.

4. Process according to Claim 3, characterized in that acid catalysts, namely phosphonitrile chlorides, are employed.